# EUROPEAN PATENT SPECIFICATION

(11) **EP 1 335 527 B1**
(45) Date of publication and mention of the grant of the patent: **31.12.2008**
(21) Application number: 01961358.7
(22) Date of filing: 04.09.2001
(51) Int. Cl.: H04L 12/28

(54) **Communication control method and wireless communication network**
Kommunikationssteuerverfahren und drahtloses Kommunikationsnetzwerk
Procédé de commande de communication et réseau de communication sans fil

(30) Priority: 26.10.2000 JP 2000326741
(43) Date of publication of application: 13.08.2003
(73) Proprietor: Sharp Kabushiki Kaisha, Osaka 545-8522 (JP)
(72) Inventor: SHOJI, Yoshitoshi, Chiba-shi, Chiba 266-0011 (JP); NANBA, Hideo, Chiba-shi, Chiba 266-0005 (JP)
(74) Representative: Brown, Kenneth Richard
(86) International application number: PCT/JP2001/007658
(87) International publication number: WO 2002/035771

(56) References cited:
- EP-A- 0 767 561
- JP-A- 9 135 247
- JP-A- 11 168 485
- JP-A- 11 252 092
- JP-A- 11 266 254
- US-A- 5 297 144

## Description

### TECHNICAL FIELD

The present invention relates to a communication control method in a communications network wherein a control station controls asynchronous packet transmission of a terminal station in a polling system.

### BACKGROUND ART

In a communications network composed of several terminal stations wherein communications are carried out mutually between individual terminal stations, one of them becomes a control station, the control station periodically transmits a synchronous packet to constitute a frame, and in the frame the individual terminal stations are controlled to transmit asynchronous packets by polling from the control station. At this time, the control station performs the polling to individual terminal stations usually in a fixed order or, when the polling priority is given to individual terminal stations, in an order based on that priority. In other words, the control station transmits polling packets to terminal stations in turn, and among the terminal stations that receives the polling packet, a terminal station having data to be transmitted can transmit it as asynchronous packets.

However, even when the control station performs polling to all terminal stations, individual terminal stations do not necessarily have transmittable data. Therefore, in order to give more opportunities of transmission to terminal stations which have data to be transmitted, a means of polling request is provided, which indicates from a terminal station to the control station that the terminal station has data to be transmitted, so that the control station transmits polling packets by priority to a terminal station that has made a polling request. This can shorten the waiting time for transmission of a terminal station, and further the control station can reduce the transmission of useless polling packets.

Meanwhile, among terminal stations of the communications network, terminal stations which are not in reception/transmission operation mode or have no transmittable data, are considered in a sleep mode under a restrictive operation state for a low power consumption.

A terminal station having sleep mode shifts from an ordinary operation mode to a sleep mode by notifying the control station of a sleep request. Even when the terminal station is in a sleep mode, it selectively receives synchronous packets the control station periodically transmits. Thus, when the control station has to release the sleep mode of the terminal station for some reason, it can make a sleep release request to the terminal station that is in the sleep mode by using this synchronous packet. When the terminal station that is in the sleep mode receives the sleep release request from the control station, it terminates the sleep mode and performs an ordinary operation.

In the communications network as described above, when one terminal station attempts to transmit an asynchronous packet to other terminal station, the source terminal station makes a polling request to the control station. Thereafter, when the source terminal station receives a polling packet for itself from the control station, it transmits, in response to that, an asynchronous packet to the destination terminal station.

However, when the destination terminal station is in a sleep mode, the asynchronous packet is not to be received at the destination terminal station even though being transmitted, resulting in the establishment of no communications. Therefore, the source terminal station, in this case, has to release the sleep mode of the destination terminal station in one way or another. In order to permit one terminal station to release a sleep mode of other terminal station, first, a means for judging whether the state of the destination terminal station is sleep mode or not, and further a means for calling on the control station to perform a sleep release of the destination terminal station are needed.

European patent application number EP 0 767 561 A discloses a communication network where communications between peripherals are designed to take place solely by means of a central means, the transmission of a data frame from a first to a second peripheral means taking place first of all by transmissions of the data frame from the first peripheral means to the central means, and then by re-transmission of this data from the central means to the second peripheral means.

US patent number US 5,297,144 discloses a wireless data communications network having a number of users communicating from individual remote stations to a central station over a single optical-infrared channel utilizing a two-stage noncontention-based multiple-access communications protocol.

### DISCLOSURE OF THE INVENTION

In order to solve the above problems, the present invention is featured in that: a station ID of a destination terminal station is included in a polling request message from a terminal station to a control station; the control station having received the polling request message confirms the operation state of the destination terminal station indicated by the station ID; polling is performed on a source terminal station having made the polling request only when the destination terminal station can perform communications; the control station makes a sleep release request to the destination terminal station when the control station confirms that the destination terminal station indicated by the station ID is in a sleep mode; and after confirming that the destination terminal station shifts to an active mode, the control station performs polling to the source terminal station having made the polling request when the destination terminal station can perform communications.

A communication control method according to the present invention in a wireless communications network having one control station and a plurality of terminal stations, is featured in that: each station is identified by a uniquely assigned station ID; each terminal station is capable of receiving and transmitting an asynchronous packet; and the control station controls the asynchronous packet transmission of the terminal station in a polling system; the method including the steps of: any of the plurality of terminal stations transmitting a polling request message to the control station requesting for reception of a polling packet for itself from the control station; and including a station ID of a destination terminal station to which the terminal station attempts to transmit an asynchronous packet in the polling request message to be transmitted to the control station by the terminal station.

Further, a communication apparatus according to the present invention in a wireless communications network having one control station and a plurality of terminal stations, is featured in that: the control station controls asynchronous packet transmission of the plurality of terminal stations in a polling system, wherein the control station accepts a polling request message from any of the terminal stations and includes: polling request storage means for holding all the polling request messages indicating that polling packets are not yet transmitted, and communication reservation detection means for detecting whether a certain station ID is designated as any of destination terminal station IDs in the polling request message stored in the polling request storage means.

Furthermore, the present invention, in a wireless communications network having one control station and other terminal stations, is featured in that: the terminal station has two operation modes, that is active mode wherein ordinary operations are carried out and sleep mode wherein operations are limited, and further has means for making a sleep request to the control station; the control station that is the above mentioned communication apparatus, has means for making a response of sleep permission or sleep rejection to the sleep request from the terminal station; and the control station makes a response of sleep permission only when the station ID of the terminal station having made the sleep request is not detected by the communication reservation detection means.

Moreover, the present invention, in a wireless communications network having one control station and other terminal stations, is featured in that the control station has terminal station state storage means for storing active or sleep operation modes on all the terminal stations of the communications network.

Further, the present invention, in a wireless communications network having one control station and other terminal stations, is featured in that: the control station that receives a polling request message confirms operation mode of a terminal station indicated by a destination terminal station ID; and the control station judges that a terminal station having transmitted the polling request message can transmit a polling packet after confirming that the destination terminal station is not in a sleep mode.

Still further, the present invention, in a wireless communications network having one control station and other terminal stations, is featured in that: the control station that receives a polling request message transmits, when an operation mode of a terminal station indicated by a destination terminal station ID is sleep mode, a sleep release request to the terminal station being in a sleep mode; and the control station suspends the judgment for allowing a terminal station having transmitted the polling request to transmit a polling packet until confirming that the mode state of the destination terminal station shifts to an active mode upon reception of the sleep release request from the control station.

Furthermore, the present invention, in a wireless communications network having one control station and other terminal stations, is featured in that: the control station includes a station ID of a destination terminal station that is confirmed to be in an active mode in a polling packet to be transmitted to a terminal station having transmitted a polling request message.

This specification includes part or all of the contents as disclosed in the specification and/or drawings of Japanese Patent Application No. 2000-326741, which is a priority document of the present application.

### BRIEF DESCRIPTION OF THE DRAWINGS

Fig. 1 is a schematic view of a communications network to which the present invention is applicable.
Fig. 2 is a block diagram of a frame on a wireless channel.
Fig. 3 is a block diagram of a frame start packet according to the present invention.
Fig. 4 is a block diagram of a terminal synchronous packet according to the present invention.
Fig. 5 is a block diagram of a control station according to the present invention.
Fig. 6 is a view illustrating a procedure for the case wherein the terminal station makes a sleep request.
Fig. 7 is a view illustrating a procedure for the case wherein the control station of the present invention receives the sleep request.
Fig. 8 is a view illustrating a procedure for the case wherein the control station performs a sleep release of the terminal station being in a sleep mode.
Fig. 9 is a view illustrating a procedure for the case wherein the terminal station being in a sleep mode receives the sleep release from the control station.
Fig. 10 is a view illustrating a procedure for the case wherein the terminal station transmits an asynchronous packet.
Fig. 11 is a view illustrating a procedure for the case wherein the control station receives a polling request from the terminal station.
Fig. 12 is a view illustrating a packet transmission procedure when an asynchronous packet recipient is in an active mode.
Fig. 13 is a view illustrating a packet transmission procedure when an asynchronous packet recipient is in a sleep mode.

### BEST MODE FOR CARRYING OUT THE PRESENT INVENTION

The present invention will be described when it is applied to a communications network which wirelessly implements equivalent functions of the IEEE 1394 interface.

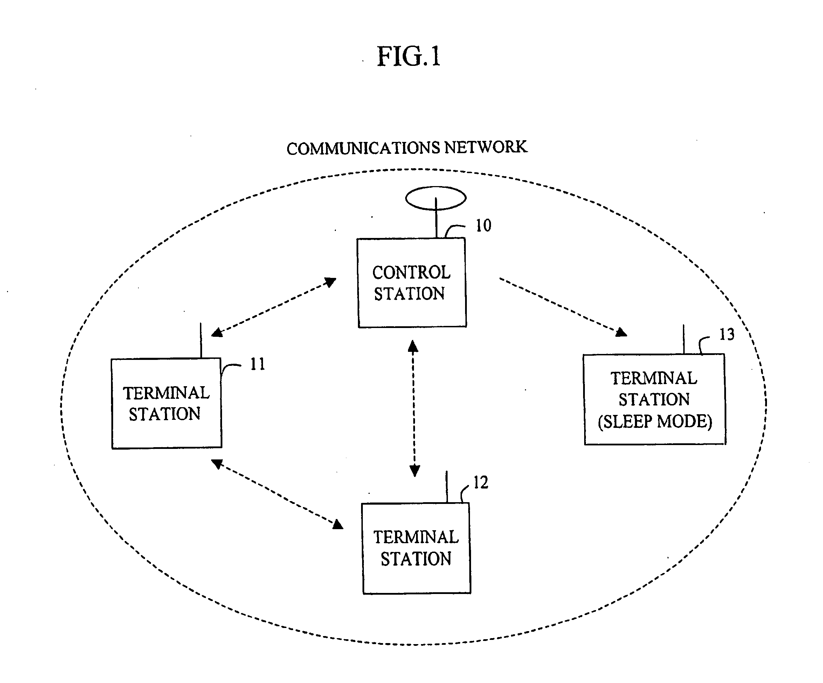

Fig. 1 is an embodiment of a communications network, to which the present invention is applied. There exist a plurality of wireless terminal stations 10, 11, 12, and 13, each of which is identified by a station ID. Among them the terminal station 10 works as a control station, and the other terminal stations have a sleep mode. The control station 10 manages frame timing, communication band, and operation modes of individual terminal stations, and controls polling operations over a wireless channel. When the terminal station 13 is in a sleep mode, the control station 10 and the terminal stations 11 and 12 can mutually communicate with each other through a wireless channel, but the terminal station 13 only receives in a fixed cycle a frame start packet transmitted by the control station 10.

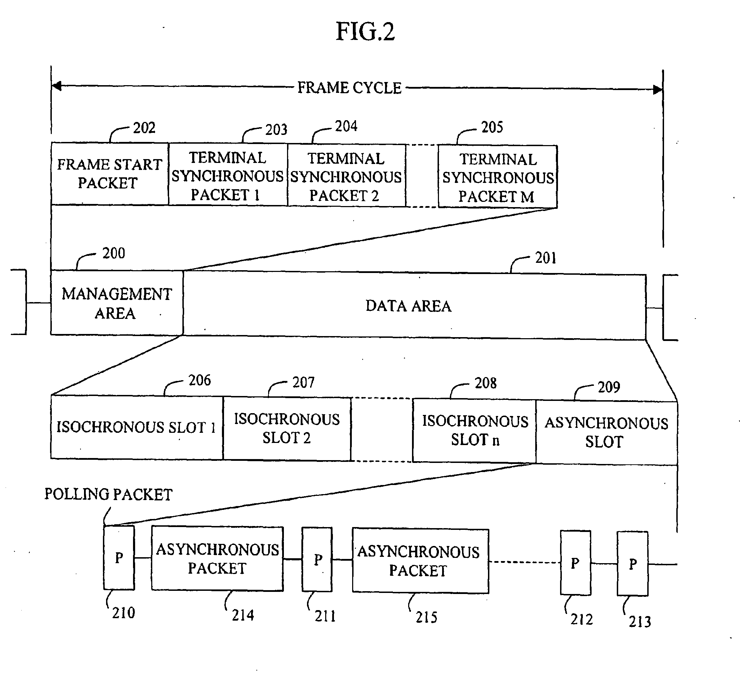

Fig. 2 shows a frame configuration existing over a wireless channel. The frame is time-divided into a management area 200 and a data area 201. In the management area 200, a frame start packet 202 that the control station 10 transmits to all the terminal stations 11, 12, and 13 for each frame cycle, and terminal synchronous packets 203, 204, and 205 that the terminal stations 11, 12, and 13 transmit based on the information of the frame start packet are structured. The data area 201 is divided into isochronous slots 206, 207, and 208 pertaining to a band reserved for isochronous packet transmission, and an asynchronous slot 209 for the remaining band. The isochronous slots 206, 207, and 208 are bands reserved for use in transmitting mainly stream data, through which isochronous packets are transmitted. The asynchronous slot 209 is a band to perform communications by polling control. It is used to transmit polling packets 210, 211, 212, and 213 whereby the control station 10 performs polling to the terminal stations 11, 12, and 13, and asynchronous packets 214 and 215 whereby the control station and the terminal stations 11, 12, and 13 can transmit arbitrary data.

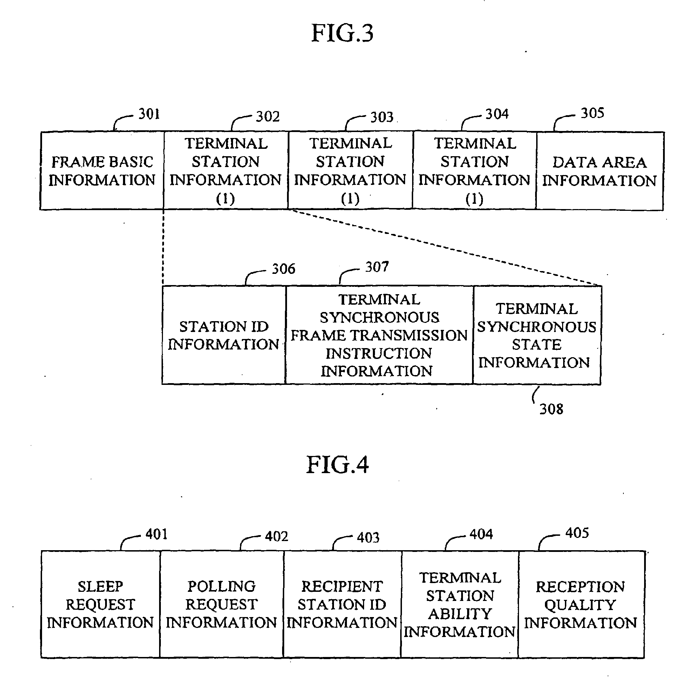

Fig. 3 shows the contents of the frame start packet 202, which contains frame basic information 301, a plurality of terminal station information pieces 302, 303, and 304, and data area information 305. Further, each of the terminal station information pieces 302, 303, and 304 has a station ID 306, a terminal synchronous packet transmission instruction 307, and a terminal synchronous state 308. In the terminal station information pieces 302, 303, and 304, when a terminal station indicated by a station ID 306 operates in an active mode, the terminal synchronous packet transmission instruction 307 is set to ON, and also "transmission" is indicated in the terminal synchronous state 308. When the terminal station indicated by the station ID 306 is in a sleep mode, the terminal synchronous packet transmission instruction 307 is set to OFF, and also "suspension" is indicated in the terminal synchronous state 308. In the data area information 305, the length of the data area 201 followed by the management area 200, start positions of individual isochronous slots 206, 207, and 208, and the asynchronous slot 209 are indicated. The terminal stations 11, 12, and 13 which have received the frame start packet 202, if terminal station information pieces 302, 303, and 304 containing the indication of their own station ID 306 are provided, refer to them. When the terminal synchronous frame transmission instruction 307 is established, the terminal stations transmit the terminal synchronous packets 203, 204, and 205 to the management area 200 at a predetermined timing.

Fig. 4 shows the contents of the terminal synchronous packets 203, 204, and 205, which contain a sleep request 401, a polling request 402, a destination terminal station ID 403, terminal station ability information 404, and reception quality 405. When the terminal stations 11, 12, and 13 make the shift to the sleep mode, the sleep request 401 is set to ON and the transmission is carried out. Also, when the terminal stations 11, 12, and 13 make a polling request to the control station 10, the polling request 402 is set to ON and further the terminal synchronous packets 203, 204, and 205 provided with the destination terminal station ID 403 are transmitted.

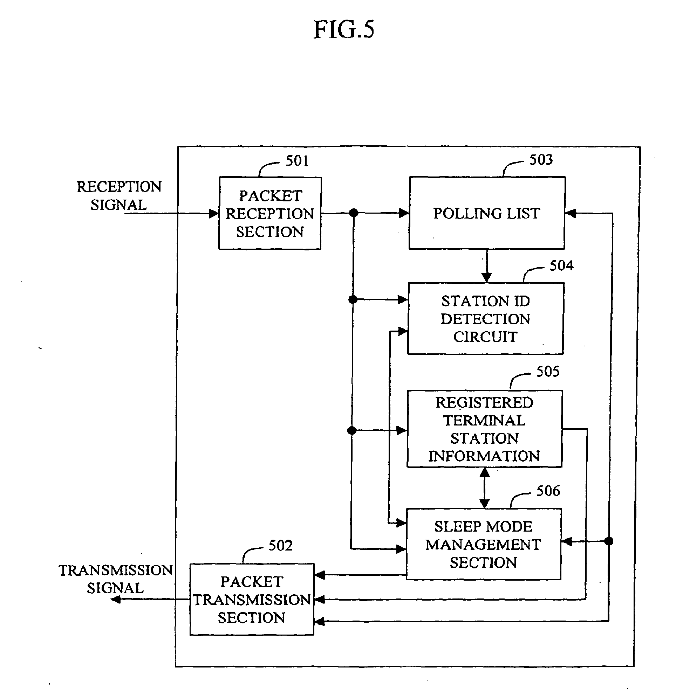

Fig. 5 shows a configuration of a communication device, according to the present invention, which operates as the control station 10. The communication device comprises a packet reception section 501, a packet transmission section 502, a polling list 503 as a polling request storage means, a station ID detection circuit 504 as an ID detection means, registered terminal station information 505 as a means for storing terminal station states, and a sleep mode management section 506 as a means for making a response regarding sleep permission or sleep rejection to the sleep request from the terminal station. The packet reception section 501, when receiving the terminal synchronous packets 203, 204, and 205 having polling requests 402 set in ON, generates a transmitter terminal station ID and destination terminal station ID of the polling request as a pair of polling request information pieces. Subsequently, the packet reception unit 501 confirms the operation mode of the terminal station indicated by the destination terminal station ID in accordance with the registered terminal station information 505. When the terminal station is in an active mode, the polling request message is stored in the polling list 503 as clear-to-send. When the terminal station is in a sleep mode, the message is stored as pending.

When the sleep request 401 of the received terminal synchronous packet 205 is set to ON or the terminal synchronous packet 205 indicating that the terminal station 13 makes a shift from a sleep mode to an active mode is received, the ID of that terminal station is notified to the sleep mode management section 506. The sleep mode management section 506 refers to the polling request messages stored as pending in the polling list 503 and instructs the packet transmission section 502 to release the sleep mode of the terminal station that is a recipient of the polling request message and in a sleep mode. Further, the sleep mode management section searches, by the station ID the detection circuit 504, destination terminal station IDs of the polling list 503 for an ID of terminal station that has made a sleep request. When the terminal station ID is not detected, the operation mode of the terminal station corresponding to the terminal station ID in the registered terminal station information 505 is stored as in a sleep mode. When the terminal station ID is detected, the sleep request is neglected. Furthermore, the sleep mode management section 506 searches, by the station ID detection circuit 504, the destination terminal station IDs in the polling list 503 for the station ID of the terminal station 13 that is released from the sleep mode. When the detected polling request is pending, that polling request is changed to clear-to-send. While transmitting the frame start packet 202, the packet transmission section 502 generates and transmits the terminal station information pieces 302, 303, and 304 in accordance with the content of the registered terminal station information 505 and the instruction of the sleep mode management section 506. Also, in the asynchronous slot 209 region of the frame, the packet transmission section 502 refers to clear-to-send polling request messages of the polling list 503, and generates and transmits the polling packets 210, 211, 212, and 213, each containing a destination terminal station ID corresponding to a terminal station indicated by the transmitter terminal station ID. Then, the processed polling request message is deleted from the polling list 503.

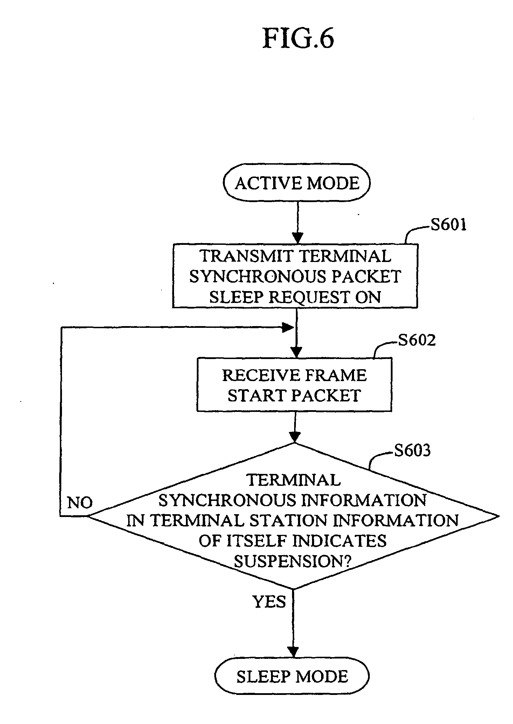

Fig. 6 shows a sleep request procedure wherein a terminal station makes a shift from an active mode to a sleep mode. When the terminal station 11 shifting to a sleep mode transmits the terminal synchronous packet 203 from itself, it transmits the packet with the sleep request 401 set in ON (S601). Thereafter, when the terminal station 11 monitors the frame start packet 202 from the control station 10 (S602), and detects that the terminal synchronous state 308 in the terminal station information 302 of itself is set in the suspension state (S603), the control station 10 is assumed to accept the sleep request and then the terminal station 11 makes a shift to a sleep mode.

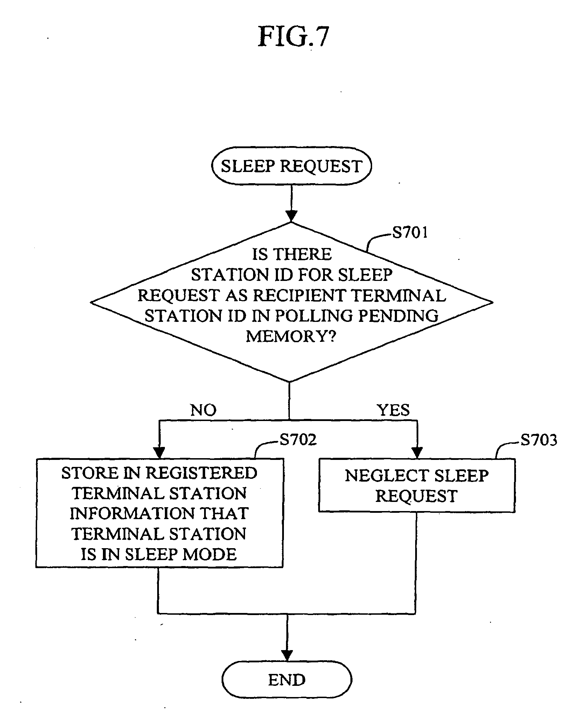

Fig. 7 shows a procedure undertaken by the control station 10 in response to the sleep request of Fig. 6. The control station 10 searches the destination terminal station IDs of the polling pending memory for a station ID of the terminal station 11 that has transmitted the sleep request 401 (S701). When it is not detected, the sleep request is accepted and it is stored in the registered terminal station information that the terminal station 11 that has made the sleep request is in a sleep mode (S702). By this, the terminal synchronous packet transmission instruction 307 of the terminal station information 302 corresponding to the terminal station 11 is set to OFF and the terminal synchronous state 308 is set in the suspension state in subsequent frame start packet 202. When being detected, the sleep request is neglected (S703).

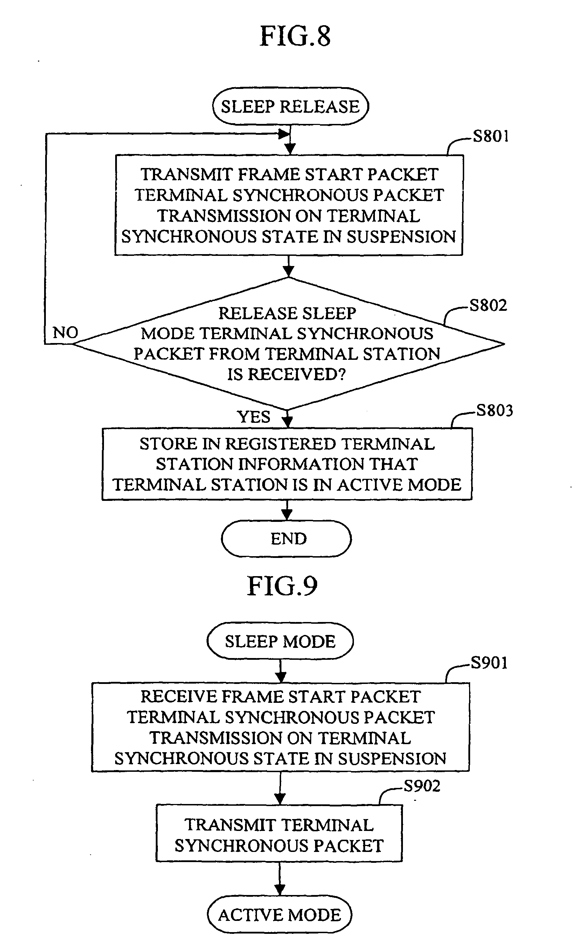

Fig. 8 is a sleep release procedure of the terminal station 13 by the control station 10. The control station 10 transmits, when sleep release of the terminal station 13 being in a sleep mode is required, the frame start packet 202 wherein the terminal synchronous state 308 of terminal station information 304 of the terminal station to be sleep-released is set in the suspension state and the terminal synchronous packet transmission instruction 307 is set to ON (S801). This setting is kept until the terminal synchronous packet 205 from the terminal station 13 to be sleep-released is received (S802). When the terminal synchronous packet 205 of interest is received, the sleep release of the terminal station 13 is judged to be completed and the state of the terminal station is stored as an active mode in the registered terminal station information 505 (S803).

Fig. 9 shows a procedure for receiving the sleep release at the side of the terminal station 13 in contrast to Fig. 8. When the terminal station 13 being in a sleep mode detects that the terminal synchronous packet transmission instruction 307 is set to ON in the terminal station information 304 of itself in the received frame start packet 202 (S901), the terminal station 13 makes a shift from a sleep mode to an active mode and starts the transmission of the terminal synchronous packet 205 (S902).

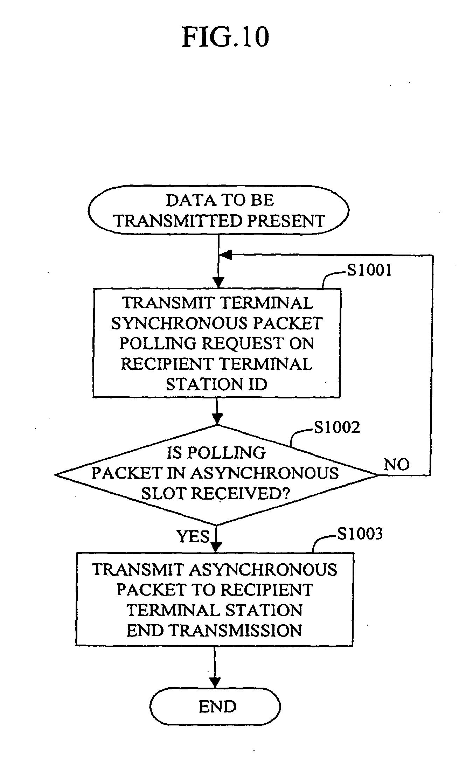

Fig. 10 shows a transmission procedure of the asynchronous packet 215 by the terminal station 12. When the terminal station 12 has to transmit the asynchronous packet 215, in the terminal synchronous packet 204 to be transmitted from itself, the terminal ID 403 of a destination terminal station and the polling request 402 ON are set up, and then the transmission is carried out (S1001). Thereafter, the terminal station 12 waits for reception of the polling packet 211 for itself from the terminal station 10, of the asynchronous slot 209 (S1002). Upon the reception, the asynchronous packet 215 is transmitted to the destination terminal station (S1003). When the polling packet in the asynchronous slot 209 is not received (S1002), the polling request is repeated at a time of transmitting a subsequent terminal synchronous packet.

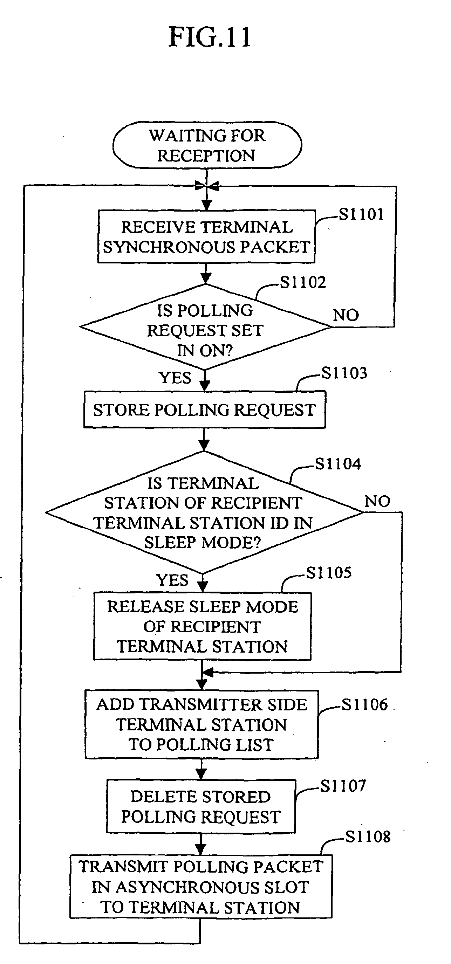

Fig. 11 shows a polling procedure by the control station 10 in contrast to Fig. 10. In the case where the control station receives the terminal synchronous packet 204 from the terminal station 12 (S1101) and the polling request 402 is set to ON (S1102), the station ID of the terminal station 12 having made the polling request and a destination terminal station ID are stored as polling request information in the polling pending memory (S1103), and then the registered terminal station information 505 is searched to determine whether the recipient terminal ID is stored as in a sleep mode (S1104). When the destination terminal station is in a sleep mode, the control station 10 makes a sleep release (S1105). This sleep release is, in fact, carried out in accordance with the procedure shown in Fig. 8. When the destination terminal station is not in a sleep mode or the sleep release is completed, polling request information is added to the polling list 503 (S1106) and deleted from the polling pending memory (S1107). The control station 10 sequentially transmits polling packets in the asynchronous slot 209 region in accordance with polling request information stored in the polling list 503 (S1108).

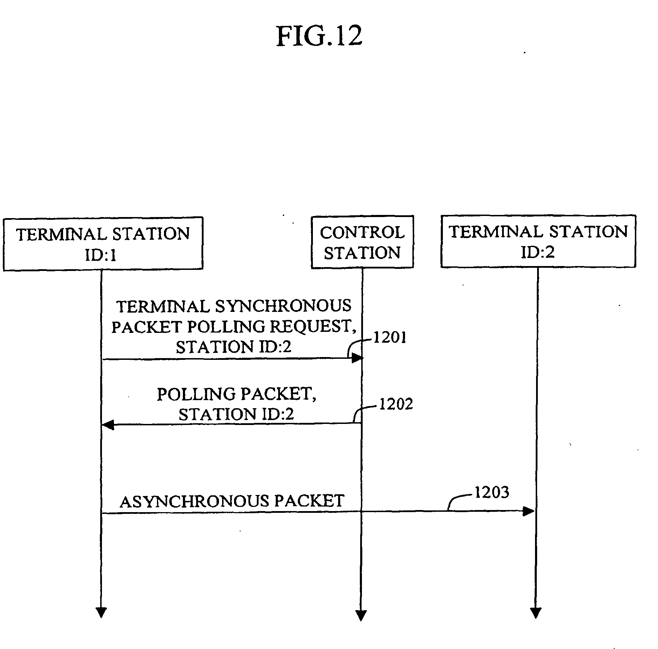

Fig. 12 shows a packet transmission procedure over a wireless channel in the case where there are a control station 10, terminal stations (ID: 1) and (ID: 2), and the terminal station (ID: 1) transmits asynchronous packets 214 and 215 to the terminal station (ID: 2). At this time, it is stored in the registered terminal station information 505 of the control station 10 that the terminal station (ID: 2) is in an active mode. The terminal station (ID: 1) sets the polling request 402 in ON and "ID :2" as a destination terminal station in the terminal synchronous packet 1201 to be transmitted from itself, and then transmits the packet. When the control station receives the terminal synchronous packet 1201, it confirms the state of the destination terminal station (ID: 2) by referring to the registered terminal station information 505 because the polling request 402 is ON. Then, the terminal station is in an active mode, and thus it is judged that communication is possible and the polling request information is stored as clear-to-send in the polling list 503. Later, the control station 10 refers to the polling list 503 in the asynchronous slot 209 region in the frame, and in accordance with the polling request information 402 of the clear-to-send terminal synchronous packet 1201, the control station transmits a polling packet 1202 wherein the destination terminal station ID :2 is set to the terminal station (ID :1). Immediately after the terminal station (ID: 1) receives the polling packet 1202, it transmits the asynchronous packet 1203 to the terminal station (ID: 2).

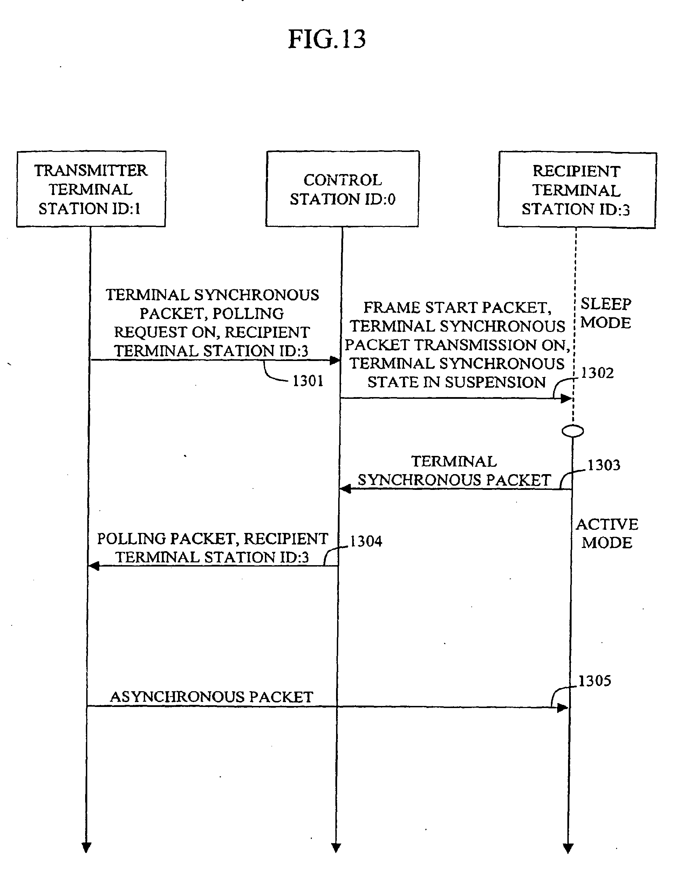

Fig. 13 shows a communication procedure wherein the terminal station (ID: 1) transmits the asynchronous packets 214 and 215 to the terminal station (ID: 3), when there are a control station 10, a terminal station (ID: 1), and a terminal station (ID: 3) and the terminal station (ID: 3) is in a sleep mode. At this time, it is stored in the registered terminal station information 505 of the control station 10 that the terminal station (ID: 3) is in a sleep mode. The terminal station (ID: 1) sets the polling request 402 to the ON state and ID: 3 as a destination terminal station in a terminal synchronous packet 1301 to be transmitted by itself, and then transmits the terminal synchronous packet. When the control station 10 receives the terminal synchronous packet 1301 from the terminal station (ID: 1), the control station confirms the state of the terminal station (ID: 3) as a recipient by referring to the registered terminal station information 505 since the polling request 402 is set to ON. Then, when it judges the terminal station to be in a sleep mode, it stores the polling request information in the polling list 503 as pending. Subsequently, in order to perform sleep release of the terminal station (ID: 3), the frame start packet 1302 is transmitted, containing terminal station information corresponding to the terminal station (ID: 3), which has that the terminal synchronous state 308 is set in the suspension state and the terminal synchronous packet transmission instruction 307 is set to ON. When the terminal station (ID: 3) in a sleep mode receives the frame start packet 1302 and the terminal synchronous packet transmission instruction 307 is set to ON in the terminal station information for itself, the terminal station shifts to an active mode and transmits the terminal synchronous packet 1303. The control station judges that the terminal station (ID: 3) has shifted to an active mode when it receives the terminal synchronous packet 1303. Then, the control station changes the mode of the terminal station (ID: 3) in the registered terminal station information 505 into active mode and stores it, thereby judging that the terminal station (ID: 3) can perform communications. The polling request information of the terminal synchronous packet 1301 in the polling list 503 is changed from pending to clear-to-send. Later, the control station refers to the polling list 503 in the asynchronous slot region of the frame, and transmits to the terminal station (ID: 1) the polling packet 1304 wherein ID: 3 is set as a destination terminal station in accordance with the polling request information of the clear-to-send terminal synchronous packet 1301. Immediately after receiving the polling packet 1304, the terminal station (ID: 1) transmits the asynchronous packet 1305 for the terminal station (ID: 3).

According to the present invention, a terminal station that attempts to transmit an asynchronous packet includes a destination terminal station ID in a polling request to a control station, thereby enabling the control station to control the operation mode of the destination terminal station if necessary. Thus, it is not necessary for the terminal station at the polling request side to judge the operation mode of the destination terminal station, and the transmission processing of an asynchronous packet can be always carried out by an identical procedure, thereby making the processing of the terminal station simple.

Further, the present invention can automatically prevent the transmission of an asynchronous packet for a terminal station in a sleep mode.

### INDUSTRIAL APPLICABILITY

The present invention, in the case where one terminal station attempts to transmit an asynchronous packet to other terminal station, can provide a communication control method that enables the source terminal station to perform communications, even when the destination terminal station is in a sleep mode, without the necessity of any special processing.

## Claims

1. A communication control method in a wireless communications network having one control station (10) and a plurality of terminal stations (11, 12, 13), each terminal station (11, 12, 13) being identified by a uniquely assigned station ID, and each terminal station (11, 12, 13) capable of receiving and transmitting an asynchronous packet (214, 215, 1203, 1305), the control station (10) controlling the asynchronous packet transmission of the plurality of terminal stations (11, 12, 13) in a polling system, the method **characterised by** comprising the steps of:
any one of the plurality of terminal stations (11, 12, 13) transmitting a polling request message (402, 1201, 1301) to the control station (10) requesting for reception of a polling packet for itself from the control station, and
including a station ID of a destination terminal station (11, 12, 13), to which the requesting terminal station (11, 12, 13) attempts to transmit an asynchronous packet (1203, 1305), in the polling request message (1201, 1301) to be transmitted to the control station (10) by the terminal station (11, 12, 13).

2. The communication control method of claim 1, wherein
the control station (10) that receives the polling request message (402, 1201, 1301) confirms the operation mode of the terminal station indicated by the destination terminal station (S1104); and
the control station (10) judges that the terminal station (11, 12, 13) having transmitted the polling request message can transmit the polling packet after confirming that the destination terminal station is not in a sleep mode.

3. The communication control method of claim 1, wherein
the control station (10) that receives the polling request message transmits, when an operation mode of the terminal station indicated by the destination terminal station ID is in a sleep mode, a sleep release request (1302) to the destination terminal station; and
the control station (10) suspends the judgment, to allow the terminal station having transmitted the polling request to transmit a polling packet until confirming that the mode state of the destination terminal station shifts to an active mode upon reception of the sleep release request from the control station.

4. The communication control method of claim 1, wherein
the control station (10) includes the station ID of the destination terminal station that is confirmed to be in an active mode in a polling packet to be transmitted to the terminal station having transmitted the polling request message.

5. The communication control method of claim 1, wherein the control station (10) confirms if the destination terminal station is in an active mode or a sleep mode.

6. A wireless communications network having one control station (10) and a plurality of terminal stations (11, 12, 13), wherein the control station is adapted to (10) control the asynchronous packet transmission of the plurality of terminal stations (11, 12, 13) in a polling system **characterised in that** the control station is adapted to accept a polling request message (1201, 1301) from any of the terminal stations, and comprises:
polling request storage means (503) for holding all the polling request messages indicating that polling packets are not yet transmitted; and
communication reservation detection means (504) for detecting whether a certain station ID is designated as one of the destination terminal station IDs in the polling request message stored in the polling storage means.

7. The wireless communications network of claim 6, wherein:
each terminal station (11, 12, 13) is adapted to have two operation modes: an active mode wherein ordinary operations are carried out; and a sleep mode wherein operations are limited, and further having means for making a sleep request to the control station;
the control station (10) has means for making a response regarding sleep permission or sleep rejection to the sleep request from one of the plurality of terminal stations, and
wherein the control station is adapted to make a response regarding sleep permission only when the station ID of the terminal station having made the sleep request is not detected by the communication reservation detection means (504).

8. The wireless communications network of claim 5, wherein
the control station (10) has terminal station storage means (505) for storing operation modes of active more or sleep mode on all the terminal stations of the communications network.

## Patentansprüche

1. Kommunikationssteuerverfahren in einem drahtlosen Kommunikationsnetzwerk, das eine Steuerstation (10) und eine Mehrzahl von Endgeräten (11, 12, 13) aufweist, wobei jedes Endgerät (11, 12, 13) durch eine eindeutig zugeordnete Stations-ID identifiziert wird, und wobei jedes Endgerät (11, 12, 13) in der Lage ist, ein asynchrones Paket (214, 215, 1203, 1305) zu empfangen und zu übertragen, wobei die Steuerstation (10) die asynchrone Packetübertragung der Mehrzahl von Endgeräten (11, 12, 13) in einem Pollingsystem steuert, wobei das Verfahren **gekennzeichnet ist durch** das Umfassen der Schritte:
eine beliebige der Mehrzahl von Endgeräten (11, 12, 13) überträgt eine Polling- Anforderungsnachricht (402, 1201, 1301) zu der Steuerstation (10), die den Empfang eines Polling-Packets für sich selbst von der Steuerstation anfordert, und
eine Stations-ID eines Ziel-Endgeräts (11, 12, 13), zu dem das anfragende Endgerät bzw. Polling-Endgerät (11, 12, 13) versucht, ein asynchrones Paket (1203, 1305) zu übertragen, in die Polling-Anforderungsnachricht (1201, 1301) einfügen, die zu der Steuerstation (10) von dem Endgerät (11, 12, 13) übertragen werden soll.

2. Kommunikationssteuerverfahren nach Anspruch 1, wobei
die Steuerstation (10), die die Polling-Anforderungsnachricht (402, 1201, 1301) empfängt, den Betriebsmodus des Endgeräts, das durch die Ziel-Endgeräte-ID (S1104) bezeichnet ist, feststellt; und
die Steuerstation (10) bestätigt, dass das Endgerät (11, 12, 13), das die Polling-Anforderungsnachricht übertragen hat, das Polling-Packet nach der Bestätigung, dass das Ziel-Endgerät nicht in einem Ruhezustand ist, übertragen kann.

3. Kommunikationssteuerverfahren nach Anspruch 1, wobei
die Steuerstation (10), die die Polling-Anforderungsnachricht empfängt, wenn ein Betriebsmodus des Endgeräts, das durch die Ziel-Endgeräte-ID bezeichnet ist, in einem Ruhezustand ist, eine Aufweck-Aufforderung (1302) zu dem Ziel-Endgerät überträgt; und
die Steuerstation (10) die Feststellung aufhebt, um es dem Endgerät, das die Pollinganforderung übertragen hat, zu ermöglichen, ein Polling-Packet zu übertragen, bis festgestellt wird, dass der Moduszustand des Ziel-Endgeräts nach dem Empfang der Aufweck-Aufforderung von der Steuerstation in einen aktiven Modus übergeht.

4. Kommunikationssteuerverfahren nach Anspruch 1, wobei
die Steuerstation (10) die Stations-ID des Ziel-Endgeräts, von dem festgestellt wurde, dass es sich in einem aktiven Modus befindet, in ein Polling-Packet einschließt, das zu dem Endgerät, das die Polling-Anforderungsnachricht übertragen hat, übertragen werden soll.

5. Kommunikationssteuerverfahren nach Anspruch 1, wobei die Steuerstation (10) feststellt, ob das Ziel-Endgerät in einem aktiven Modus oder einem Ruhemodus ist.

6. Drahtloses Kommunikationsnetzwerk, das eine Steuerstation (10) und eine Mehrzahl von Endgeräten (11, 12, 13) aufweist, wobei die Steuerstation (10) geeignet ist, die asynchrone Packetübertragung der Mehrzahl von Endgeräten (11, 12, 13) in einem Pollingsystem zu steuern, **dadurch gekennzeichnet, dass** die Steuerstation geeignet ist, um eine Polling-Anforderungsnachricht (1201, 1301) von irgendeinem der Endgeräten zu akzeptieren, und umfasst:
ein Polling-Anforderungsspeichermittel (503), um jede der Polling-Anforderungsnachrichten zu halten, die anzeigen, dass die Polling-Packete noch nicht übertragen werden; und
ein Kommunikationsreservierungs-Erkennungsmittel (504), um zu erkennen, ob eine bestimmte Stations-ID als eine der Ziel-Endgeräte-IDs in der Polling-Anforderungsnachricht, die in dem Pollingspeichermittel gespeichert ist, **gekennzeichnet** ist.

7. Drahtloses Kommunikationsnetzwerk nach Anspruch 6, wobei:
jedes Endgerät (11, 12, 13) geeignet ist, zwei Betriebsmoden aufzuweisen: einen aktiven Modus, wobei gewöhnliche Operationen durchgeführt werden; und einen Ruhemodus, in dem Operationen eingeschränkt sind, und ferner Mittel aufweist, um eine Ruheanforderung an die Steuerstation zu machen;
die Steuerstation (10) Mittel aufweist, um eine Rückantwort durchzuführen, die sich auf eine Ruhegenehmigung oder eine Ruhezurückweisung auf die Ruheanforderung von einem der Mehrzahl von Endgeräten bezieht, und
wobei die Steuerstation geeignet ist, eine Rückantwort durchzuführen, die sich nur auf eine Ruheerlaubnis bezieht, wenn die Stations-ID des Endgeräts, das die Ruheanforderung gemacht hat, nicht durch das Kommunikationsreservierungs-Erkennungsmittel (504) erkannt wird.

8. Drahtloses Kommunikationsnetzwerk nach Anspruch 5, wobei
die Steuerstation (10) Endgeräte-Speichermittel (505) aufweist, um Operationsmoden des aktiven Modus oder Ruhemodus an allen Endgeräten des Kommunikationsnetzwerks zu speichern.

## Revendications

1. Procédé de commande de communication dans un réseau de communications sans fil comportant une station de commande (10) et de multiples stations terminales (11, 12, 13), chaque station terminale (11, 12, 13) étant identifiée par un identifiant de station attribué de manière unique et étant capable de recevoir et de transmettre un paquet asynchrone (214, 215, 1203, 1305), et la station de commande (10) commandant la transmission de paquets asynchrones des multiples stations terminales (11, 12, 13) selon un système d'interrogation, lequel procédé est **caractérisé en ce qu'**il comprend les étapes :
de transmission par l'une quelconque des multiples stations terminales (11, 12, 13) d'un message de demande d'interrogation (402, 1201, 1301) à la station de commande (10) pour demander à recevoir de la station de commande un paquet d'interrogation pour elle-même, et
d'inclusion d'un identifiant de station d'une station terminale (11, 12, 13) de destination à laquelle la station terminale (11, 12, 13) demandeuse tente de transmettre un paquet asynchrone (1203, 1305), dans le message de demande d'interrogation (1201, 1301) qui doit être transmis à la station de commande (10) par la station terminale (11, 12, 13).

2. Procédé de commande de communication selon la revendication 1, dans lequel
la station de commande (10) qui reçoit le message de demande d'interrogation (402, 1201, 1301) confirme le mode de fonctionnement de la station terminale indiquée par l'identifiant de station terminale de destination (S1104) ; et
la station de commande (10) juge que la station terminale (11, 12, 13) qui a transmis le message de demande d'interrogation peut transmettre le paquet d'interrogation après confirmation que la station terminale de destination n'est pas en mode de veille.

3. Procédé de commande de communication selon la revendication 1, dans lequel
la station de commande (10) qui reçoit le message de demande d'interrogation transmet, lorsqu'un mode de fonctionnement de la station terminale indiquée par l'identifiant de station terminale de destination est un mode de veille, une demande de fin de veille (1302) à la station terminale de destination ; et
la station de commande (10) suspend son jugement, pour permettre à la station terminale qui a transmis la demande d'interrogation de transmettre un paquet d'interrogation, jusqu'à confirmation que l'état du mode de la station terminale de destination est passé en mode actif lors de la réception de la demande de fin de veille de la station de commande.

4. Procédé de commande de communication selon la revendication 1, dans lequel
la station de commande (10) inclut l'identifiant de station de la station terminale de destination dont le mode actif est confirmé dans un paquet d'interrogation devant être transmis à la station terminale qui a transmis le message de demande d'interrogation.

5. Procédé de commande de communication selon la revendication 1, dans lequel la station de commande (10) confirme si la station terminale de destination est en mode actif ou en mode de veille.

6. Réseau de communications sans fil comportant une station de commande (10) et de multiples stations terminales (11, 12, 13), dans lequel la station de commande (10) est adaptée pour commander la transmission de paquets asynchrones des multiples stations terminales (11, 12, 13) selon un système d'interrogation, **caractérisé en ce que** la station de commande est adaptée pour accepter un message de demande d'interrogation (1201, 1301) de l'une quelconque des stations terminales, et comprend :
des moyens de stockage de demandes d'interrogation (503) pour conserver tous les messages de demande d'interrogation indiquant que des paquets d'interrogation ne sont pas encore transmis ; et
des moyens de détection de réservation de communication (504) pour détecter si un identifiant de station donné est désigné comme l'un des identifiants de station terminale de destination dans le message de demande d'interrogation stocké dans les moyens de stockage de demandes d'interrogation.

7. Réseau de communications sans fil selon la revendication 6, dans lequel :
chaque station terminale (11, 12, 13) est adaptée pour avoir deux modes de fonctionnement : un mode actif dans lequel des opérations normales sont exécutées, et un mode de veille dans lequel des opérations sont limitées, et comporte également des moyens pour faire une demande de veille à la station de commande ;
la station de commande (10) comporte des moyens pour fournir une réponse concernant une autorisation de veille ou un refus de veille à la demande de veille provenant de l'une des multiples stations terminales, et
dans lequel la station de commande est adaptée pour fournir une réponse concernant une autorisation de veille uniquement lorsque l'identifiant de station de la station terminale qui a fait la demande de veille n'est pas détecté par les moyens de détection de réservation de communication (504).

8. Réseau de communications sans fil selon la revendication 6, dans lequel
la station de commande (10) comporte des moyens de stockage de station terminale (505) pour stocker des modes de fonctionnement actif ou de veille sur toutes les stations terminales du réseau de communications.
